# EUROPEAN PATENT SPECIFICATION

(11) **EP 1 640 243 B1**
(45) Date of publication and mention of the grant of the patent: **23.01.2008**
(21) Application number: 04022687.0
(22) Date of filing: 23.09.2004
(51) Int. Cl.: B62D 5/04

(54) **Rack type electric power steering apparatus**
Elektrisch unterstützte Zahnstangenlenkung
Direction à crémaillère à assistance électrique

(43) Date of publication of application: 29.03.2006
(73) Proprietor: Mando Corporation, Pyungtaek-si, Kyunggi-do, 451-820 (KR)
(72) Inventor: Namgung, Joo, Wonju-si Kangwon-do 220-090 Korea (KR)
(74) Representative: TER MEER - STEINMEISTER & PARTNER GbR

(56) References cited:
- EP-A- 1 016 581
- DE-A1- 10 016 197
- PATENT ABSTRACTS OF JAPAN vol. 2003, no. 01, 14 January 2003 (2003-01-14) & JP 2002 274397 A (KOYO SEIKO CO LTD), 25 September 2002 (2002-09-25)

## Description

### BACKGROUND OF THE INVENTION

### 1. Field of the Invention

The present invention relates to an electric power steering apparatus, and in particular to a rack type electric power steering apparatus capable of preventing an over tight engagement of bevel gears and an over load of a motor when a bearing supports almost all the axial weight which is applied at a rack bar in such a manner that an axial back lash between a pair of bevel gears generating an assistant force by receiving a driving force of a motor in a rack type electric power steering apparatus is made larger than an axial clearance of the bearing supporting a ball nut.

### 2. Description of the Background Art

Generally, a vehicle includes a power steering system for achieving a steering safety. In the power steering apparatus, a HPS (Hydraulic Power Steering System) has been widely used in a vehicle wherein the HPS adapts a hydraulic pressure. The use of an environment friendly EPS (Electrical Power Steering System) capable of easily achieving an easier steering operation of a driver using a rotational force of a motor increases differently from a conventional method using a hydraulic pressure.

In the electric power steering apparatus, a motor is controlled by an ECU based on a running condition of a vehicle that a vehicle speed sensor and steering torque sensor detect, so that a light and comfort steering feeling is provided when a vehicle runs at a lower speed. When a vehicle runs at a high speed, a heavy steering feeling and a stable directivity are achieved. A quick steering operation is obtained in an emergency situation, so that an optimum steering condition is provided to a driver.

The electric power steering apparatus is classified into a column type EPS (C-EPS), a pinion type EPS (E-EPS), and a rack type EPS (R-EPS) based on an installation state.

Here, in the rack type EPS (R-EPS) in the electric power steering apparatus, an electric motor installed at an obtuse angle or acute angle at one side of a rack housing is engaged with a gear formed on an outer surface of a ball nut, and the ball nut is rotated by a driving force of the electric motor, so that a rack bar is slid in left and right directions for thereby generating an assistant force based on the operation of a steering wheel.

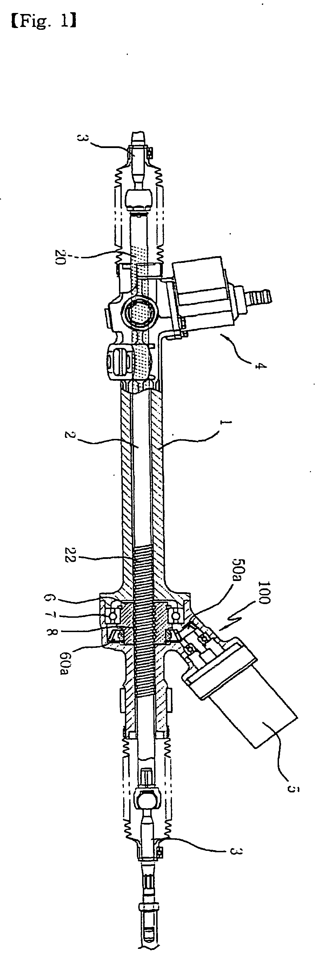

Figure 1 is a schematic cross sectional view illustrating the whole construction of a conventional rack type electric power steering apparatus (R-EPS). As shown therein, in the rack type electric power steering apparatus, a rack bar 2 having a rack gear at one side of an outer surface is installed in a rack housing 1. The both ends of the rack bar 2 are ball-jointed with a tie load 3 for thereby transmitting a transfer force of the rack bar 2. A pinion 4 is installed at one side of the rack housing 1 at a certain inclination angle with respect to a centerline of the rack bar 2 and is engaged with a rack gear formed at one side of the rack bar 2 for thereby converting a rotational force transferred from a steering shaft into a horizontal movement.

A motor 5 is installed at the other side of the rack housing 1 at an acute angle or obtuse angle with respect to a centerline of the rack bar 2. A bevel gear 50a is engaged at an end of a shaft of the motor 5 and is engaged with a bevel gear 60a of the ball nut 6 supporting the other side of the rack bar 2 in the rack housing 1 for thereby forming a gearing.

In addition, the ball nut 6 is installed in the interior of the rack housing and is rotated by the bearing 7. The other side of the rack bar 2 having a ball screw 22 at an inner side of the ball nut 6 slides by a steel ball 8.

However, in the conventional rack type electric power steering apparatus, since the back lash based on the engagement between the bevel gears 50a and 60a is smaller than an axial clearance which is maximum value of amount of movement when an inner race (or an outer race) of the bearing 7 is fixed and an outer race (or an inner race) of the bearing 7 is moved, the bevel gears support almost all the axial weight based on a sliding of the rack bar.
Therefore, when the axial weight is applied based on the rack bar, the engaged portions of the bevel gears could be moved in left and right directions, so that a tight engagement occurs. Therefore, an overload occurs in the motor. The bevel gears formed of a plastic material could be broken by the above over tight engagement, so that the reliability of the product could be decreased.

DE 10016197 A1 (D1) discloses a rack type electric power steering apparatus according to the preamble of claim 1. In this known embodiment the ball nut is rotatably supported in the rack housing by a shoulder bearing in which two circumferential rows of balls are provided so that no axial movement within the shoulder bearing is possible.

JP 2002-274397 A (abstract) (D2) discloses a rack type electric power steering apparatus according to the preamble of claim 1 wherein the ball nut is rotatably supported by two separate ball bearings provided at each axial end of the ball nut. An axial movement of the ball nut is thus avoided. Furthermore, a holding member for holding the electric motor can be eccentrically rotated so that a backlash between the bevel gears can be adjusted.

EP-A 1 016 581 (D3) discloses a rack type electric power steering apparatus according to the preamble of claim 1 wherein the ball nut is rotatably supported by a ball bearing, wherein the ball bearing keeps the ball nut axially fixed in the housing and wherein the backlash of bevel gears is adjustable.

### SUMMARY OF THE INVENTION

Accordingly, it is an object of the present invention to overcome the problems encountered in the conventional art.

It is an object of the present invention to provide a rack type electric power steering apparatus capable of preventing a possible damage of a bevel gear due to an over tight engagement and enhancing the reliability of a product by preventing an over tight engagement of bevel gears and an overload of a motor when a bearing supports almost all the axial weight which is applied at a rack bar in such a manner that an axial back lash between a pair of bevel gears generating an assistant force by receiving a driving force of a motor in a rack type electric power steering apparatus is made larger than an axial clearance of a bearing supporting a ball nut.

To achieve the above objects, there is provided a rack type electric power steering apparatus, comprising a pinion connected with a steering wheel; a rack bar that is installed in a rack housing and has one end having a rack gear engaged with the pinion and the other end having a ball screw; a ball nut that is installed at the ball screw in cooperation with a plurality of steel balls; a bearing that rotatably supports the ball nut; a motor that is installed at a certain inclination angle or at a right angle with respect to a center axis of the rack bar; a gearing formed of a pair of bevel gears for transferring a driving force from the motor to the ball nut, wherein a back lash between the bevel gears forming the gearing is larger than an axial clearance of the bearing.

In the present invention, the bearing is an axial support bearing.

### BRIEF DESCRIPTION OF THE DRAWINGS

The present invention will become better understood with reference to the accompanying drawings which are given only by way of illustration and thus are not limitative of the present invention, wherein;
Figure 1 is a schematic view illustrating a conventional electric power steering apparatus; and
Figure 2 is a cross sectional enlarged view illustrating a ball nut part of a rack type electric power steering apparatus according to the present invention.

### DETAILED DESCRIPTION OF THE PREFERRED EMBODIMENTS

The preferred embodiments of the present invention will be described with reference to the accompanying drawings.

The same elements as the construction of the conventional art will be given the same element names and numerals.

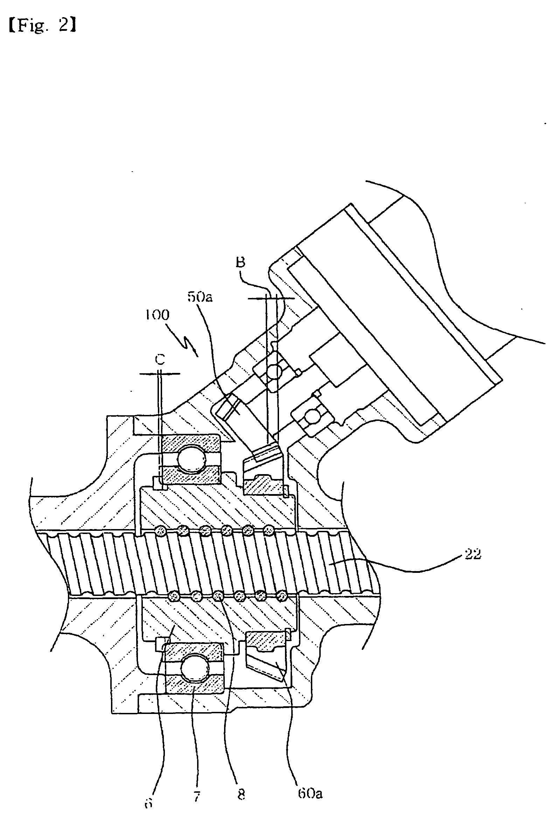

Figure 2 is an enlarged view illustrating a ball nut part of a rack type electric power steering apparatus according to the present invention. As shown therein, a ball nut 6 surrounding a screw 22 of the other side of a rack bar 2 is inserted and rotatable by a ball bearing 7 which is installed in an inner diameter portion of a rack housing 1. A plurality of steel balls 8 are inserted between the ball nut 6 and the screw 22 of the rack bar 2 for thereby guiding the left and right sliding movements of the rack bar 2 and supporting one side of the rack bar.

In addition, a bevel gear 60a is installed around an outer surface of the ball nut, and a motor 5 having a bevel gear 50a engaged with the bevel gear 60a at an end portion of axis of the motor 5 is installed at an obtuse angle or an acute angle with respect to the rack bar 2.

In the present invention, the back lash B between the engaged bevel gears 50a and 60a is larger than an axial gap, namely, an axial clearance C of the bearing that rotatably supports the ball nut.

The operation and effects of the present invention will be described.

When a driver rotates a steering wheel (not shown), the transferring force of the rack bar 2 is doubled in the direction that the wheels are rotated in combination of the numeral values such as a rotational force transferred to the pinion 4, the speed of the vehicle, the steering angle of the steering wheel, and the rotational torque, so that an optimum steering condition is provided to a driver.

In particular, in the rack bar electric power steering apparatus according to the present invention, as shown in Figure 2, when the rack bar 2 installed in the rack housing 1 is slid in left and right directions, an axial back lash B between a pair of bevel gears 50a and 60a generating an assistant force by receiving a driving force of the motor 5 is made larger than the axial clearance C of the bearing 7 that supports the ball nut. Therefore, when an axial weight is applied to the rack bar 2, namely, when the weight based on the movement in left and right directions due to the sliding of the rack bar 2 is inputted, the bearing 7 can support almost all weight.

As the rack bar 2 slides in the left and right directions, when the ball nut 7 that supporting the rack bar 2 receives the axial weight in the same direction, the bearing 7 and the bevel gear 60a are installed in one side and the other side of the outer surface of the ball nut 6 respectively, the inputted axial weight is supported by the bearing 7 or the bevel gear 60a. In the case that the back lash based on an engagement of a pair of the bevel gears 50a and 60a forming the gearing 100 is smaller than the inner gap of the axial direction, namely, the axial clearance of the bearing 7, the axial movement distance between the engaged bevel gears is smaller than the axial movement distance of the bearing. Therefore, almost the inputted axial weight is supported by the surface contact between the teeth of the bevel gears. Therefore, an over tight engagement occurs between the teeth of the gears, so that an over load could be applied to the motor.

On the contrary, in the present invention, since the back lash B between the bevel gears 50a and 60a is larger than the axial clearance C of the bearing 7, even when the ball nut 6 gets movable in the left or right direction a little by the axial weight, the bearing 7 is getting to support almost all the movement weight. Therefore, it is possible to prevent an over tight engagement due to the engagement of the bevel gears and an over load of the motor. Therefore, in the present invention, it is possible to prevent a damage of the bevel gears for thereby enhancing a reliability of the product.

The axial bearing configured to support the ball nut could be formed of a four-point bearing, a self-aligning ball bearing, an angular contact bearing, etc., so that the run out of the bevel bearing due to the weights of the axial direction and radial direction of the bearing can be compensated for thereby achieving a smooth operation of the apparatus.

As described above, in the rack type electric power steering according to the present invention, the axial back lash between the bevel gears is made larger than the axial clearance of the bearing. Therefore, when the axial weight of the rack bar is inputted, the bearing is getting to support almost the weight. In the present invention, it is possible to prevent an over tight engagement due to the engagement of the bevel gears and an over load of the motor. It is possible to prevent a possible damage of the bevel gears that could occur due to the over tight engagement for thereby enhancing a reliability of the product.

The present invention is specified as defined in the appended claims.

## Claims

1. A rack type electric power steering apparatus, comprising:
a pinion connected with a steering wheel;
a rack bar (2) that is installed in a rack housing (1) and has one end having a rack gear engaged with the pinion and the other end having a ball screw (22),
a rotatably supported ball nut (6) that is installed at the ball screw (22) in cooperation with a plurality of steel balls (8);
a motor (5) that is installed at an inclination angle or at a right angle with respect to a center axis of the rack bar (2) ;
a gearing (100) formed of a pair of bevel gears (50a, 60a) for transferring a driving force from the motor (5) to the ball nut (6);
**characterized**
**in that** a single bearing only (7) is provided that rotatably supports the ball nut (6); and
**in that** a backlash (B) between the bevel gears (50a, 60a) measured parallel to the axis of the rack bar (2) is larger than an axial clearance (C) of the bearing (7).

2. The apparatus of claim 1, wherein said bearing (7) is an axial support bearing.

3. The apparatus of claim 2, wherein said axial support bearing is a 4-pont bearing.

4. The apparatus of claim 2, wherein said axial support bearing is a selfaligning bearing.

5. The apparatus of claim 2, wherein said axial support bearing is an angular contact bearing.

## Patentansprüche

1. Elektrische Servo-Zahnstangenlenkvorrichtung, die umfasst:
ein Ritzel, das mit einem Lenkrad verbunden ist;
eine Zahnstange (2), die in einem Zahnstangengehäuse (1) installiert ist und wovon ein Ende einen gezahnten Abschnitt, der mit dem Ritzel in Eingriff ist, und das andere Ende eine Kugelumlaufspindel (22) besitzt,
eine drehbar unterstützte Kugelmutter (6), die an der Kugelumlaufspindel (22) so installiert ist, dass sie mit mehreren Stahlkugeln (8) zusammenwirkt;
einen Motor (5), der unter einem Neigungswinkel oder einem rechten Winkel in Bezug auf eine Mittelachse der Zahnstange (2) installiert ist;
ein Getriebe (100), das aus einem Paar Kegelräder (50a, 60a) gebildet ist, um eine Antriebskraft von dem Motor (5) an die Kugelmutter (6) zu übertragen;
**dadurch gekennzeichnet, dass**
nur ein einziges Lager (7) vorgesehen ist, das die Kugelmutter (6) drehbar unterstützt; und
ein Gewindespiel (B) zwischen den Kegelrädern (50a, 60a), das parallel zu der Achse der Zahnstange (2) gemessen wird, größer als ein axialer Zwischenraum (C) des Lagers (7) ist.

2. Vorrichtung nach Anspruch 1, wobei das Lager (7) ein Axialunterstützungslager ist.

3. Vorrichtung nach Anspruch 2, wobei das Axialunterstützungslager ein Vierpunktlager ist.

4. Vorrichtung nach Anspruch 2, wobei das Axialunterstützungslager ein selbst ausrichtendes Lager ist.

5. Vorrichtung nach Anspruch 2, wobei das Axialunterstützungslager ein Winkelkontaktlager ist.

## Revendications

1. Un appareil de direction assisté électrique du type à crémaillère, comportant :
- un pignon relié à un volant de direction;
- une barre de crémaillère (2) qui est installée dans un boîtier de crémaillère (1) et ayant a une extrémité des dents de crémaillère engagées avec le pignon et ayant à l'autre extrémité une vis à billes (22),
- un écrou à billes (6) supportant la rotation qui est installé sur la vis à billes (22) en coopération avec une pluralité de billes en acier (8) ;
- un moteur (5) qui est agencé à un angle d'inclinaison ou à un angle droit par rapport à un axe central de la barre de crémaillère (2) ;
- un engrenage (100) formé par une paire de roues coniques (50a, 60a) pour transférer la force motrice du moteur (5) à l'écrou à billes (6) ;
**caractérisé en ce que** :
- seulement un unique palier (7) est fourni pour supporter à rotation l'écrou à billes (6); et
- un jeu d'entredent (b) entre les roues coniques (50a, 60a) mesuré parallèlement à l'axe de la barre de crémaillère (2) est plus grand qu'un jeu axial (C) du palier (7).

2. L'appareil de la revendication 1, dans lequel ledit palier (7) est un palier-support axial.

3. L'appareil de la revendication 2, dans lequel ledit palier-support axial est un palier à quatre points.

4. L'appareil de la revendication 2, dans lequel ledit palier-support axial est un palier auto-alignant.

5. L'appareil de la revendication 2, dans lequel ledit palier-support axial est un palier à contact angulaire.
